# EUROPÄISCHE PATENTSCHRIFT

(11) **EP 1 242 213 B1**
(45) Veröffentlichungstag und Bekanntmachung des Hinweises auf die Patenterteilung: **25.06.2003**
(21) Anmeldenummer: 00977549.5
(22) Anmeldetag: 18.11.2000
(51) Int. Cl.: B23Q 3/02, B23Q 1/01, B23K 37/04, E01B 25/00

(54) **ANLAGE ZUR HERSTELLUNG VON FAHRWEGELEMENTEN**
UNIT FOR PRODUCTION OF TRACK ELEMENTS
DISPOSITIF POUR LA FABRICATION D'ELEMENTS DE VOIE

(30) Priorität: 31.12.1999 DE 19963980
(43) Veröffentlichungstag der Anmeldung: 25.09.2002
(73) Patentinhaber: Fahrion, Otmar, 70806 Kornwestheim (DE)
(72) Erfinder: Fahrion, Otmar, 70806 Kornwestheim (DE)
(74) Vertreter: Ostertag, Reinhard
(86) Internationale Anmeldenummer: EP0011451
(87) Internationale Veröffentlichungsnummer: WO01049447

(56) Entgegenhaltungen:
- EP-A- 0 151 283
- EP-A- 0 410 153
- EP-A- 0 698 685
- US-A- 3 675 915
- PATENT ABSTRACTS OF JAPAN vol. 1998, no. 06, 30. April 1998 (1998-04-30) & JP 10 046503 A (H S S T KAIHATSU KK), 17. Februar 1998 (1998-02-17)
- PATENT ABSTRACTS OF JAPAN vol. 1998, no. 06, 30. April 1998 (1998-04-30) & JP 10 046502 A (KAJIMA CORP), 17. Februar 1998 (1998-02-17)

## Beschreibung

Die vorliegende Erfindung betrifft eine Anlage zur Herstellung von Fahrwegelementen.

Fahrwege, insbesondere Schienenfahrwege und hier insbesondere Schienenfahrwege für Magnetschwebebahnen, werden aus einzelnen Fahrwegelementen zusammengesetzt. Bei vom Markt her bekannten Fahrwegelementen für eine Magnetschwebebahn handelt es sich um Betonteile, welche vor Ort hergestellt werden. Um die Fertigung zu vereinfachen und die Herstellkosten zu senken, sollen die Fahrwegelemente künftig als Metallteile in einer Fabrik vorgefertigt werden. Diese Metallteile sollen dann an die Fahrwegbaustelle verbracht und dort so miteinander verbunden werden, daß ein möglichst kontinuierlicher Verlauf des Fahrweges auch bei unterschiedlichen Geländeprofilen realisiert wird. Die für ein Projekt einer Magnetschwebebahn geplanten Fahrwegelemente sind z.B. 62 m lang und werden auf Stützen oberhalb der Bodenoberfläche angeordnet. Bei diesen Fahrwegelementen handelt es sich um Stahlbauteile aus dickwandigem Stahlblech. Im Querschnitt verfügen diese Fahrwegelemente über ein trapezförmiges Kastenprofil mit zwei in Einbaulage oberen transversalen Auslegern, so daß man insgesamt einen in etwa T-förmigen Querschnitt erhält.

Zwar sind die besagten Fahrwegelemente alle in etwa gleich lang, sie unterscheiden sich jedoch hinsichtlich ihrer Detailgeometrie. Darunter ist z.B. eine individuelle Krümmung um eine vertikale Achse (Kurvenkrümmung), um eine quer zur Längsachse des Fahrwegelements verlaufende horizontale Achse (Höhenprofil) und um eine parallel zu seiner Längsachse verlaufende Achse (Verwindung bzw. Überhöhung) zu verstehen. Diese geometrischen Eigenschaften werden für jedes Fahrwegelement individuell entsprechend den geographischen Gegebenheiten an der Stelle festgelegt, an der das jeweilige Fahrwegelement verbaut werden soll.

Trotz der auf diese Weise relativ komplexen und individuell unterschiedlichen Detailgeometrie der einzelnen Fahrwegelemente ist bei der Herstellung eine hohe Präzision gefordert. Bei den besagten Fahrwegelementen ist bei einer Gesamtlänge eines Fahrwegelements von ungefähr 62 m an den Stoßstellen eine Fertigungstoleranz von maximal 1 mm gestattet. Um diesen hohen Genauigkeitsforderungen genügen zu können, werden an die Anlagen, in denen die einzelnen Fahrwegelemente vorgefertigt werden, ebenfalls sehr hohe Anforderungen gestellt. JP-A-10046502 beschreibt den nächstkommenden Stand der Technik, wobei eine Vorrichtung zur positionierung von Fahrungelementen offenbart ist. Dabei sollen die Anlagen selbst und auch die Herstellung der Fahrwegelemente möglichst preiswert sein. Diesen Anforderungen entspricht die in Anspruch 1 angegebene erfindungsgemäße Anlage.

Die erfindungsgemäße Anlage ist aus einer Mehrzahl von in Anlagenlängsrichtung hintereinander angeordneten Spannvorrichtungen mit Spanntischen aufgebaut. Die Spanntische sind dabei jeweils so in ihrer Position verstellbar, daß jeder Spanntisch an die individuelle Geometrie und Position jenes Abschnitts eines Fahrwegelements angepaßt werden kann, der auf ihn aufgelegt werden soll. Auf diese Weise wird eine Art "sphärisches Bett" geschaffen, welches die individuelle Detailgeometrie des jeweilige Fahrwegelements wiedergibt. Aufgrund der Verstellbarkeit können unterschiedliche Fahrwegelemente unter Benutzung der gleichen Spannvorrichtung hergestellt werden, wodurch die Anlagenkosten und die Herstellkosten der einzelnen Fahrwegelemente erheblich gesenkt werden.

Vorteilhafte Weiterbildungen der Erfindung sind in Unteransprüchen angegeben.

Die Weiterbildung der Erfindung gemäß Anspruch 2 stellt die bevorzugten Verstellrichtungen und Verschwenkachsen zur Verfügung.

Eine Spannvorrichtung gemäß Anspruch 3 ist besonders robust und sicher im Betrieb.

Eine schnelle und sichere Schwenkbewegung des Spanntisches einer Spannvorrichtung der Anlage ist bei der Weiterbildung der Erfindung gemäß Anspruch 4 gegeben.

Die in Anspruch 5 dargelegte Weiterbildung der Erfindung ermöglicht eine einfache vertikale Verstellung und Verschwenkung eines Spanntisches.

Die Verstellung der Position eines Spanntisches in in Anlagenlängsrichtung gesehen lateraler Richtung wird durch die in Anspruch 6 beschriebene Weiterbildung der Erfindung auf einfache Art und Weise ermöglicht.

Damit zu jedem Zeitpunkt während des Herstellvorgangs eines Fahrwegelements definierte geometrische Verhältnisse vorliegen, sollte der entsprechende Abschnitt des Fahrwegelements an einem Spanntisch festgelegt werden können. Eine Möglichkeit hierfür ist in Anspruch 7 angegeben.

Bei unterschiedlichen örtlichen geometrischen Gegebenheiten am Fahrwegelement erhöht die erfindungsgemäße Weiterbildung gemäß Anspruch 8 die universelle Verwendbarkeit einer Spannvorrichtung der Anlage.

Der Ein- und Ausbau des Fahrwegelements in eine Spannvorrichtung bzw. aus der Spannvorrichtung wird durch die Weiterbildung der Erfindung erleichtert, welche in Anspruch 9 angegeben ist. Außerdem können auf einer solchen Spannvorrichtung Fahrwegelemente unterschiedlicher Breite gefertigt werden.

In Anspruch 10 ist eine Weiterbildung der Erfindung angegeben, welche eine sichere und komfortable Verstellung der Position und ein einfaches Verschwenken des Spanntisches einer Spannvorrichtung der erfindungsgemäßen Anlage ermöglicht.

Die Einstellung der Position und Lage eines Spanntisches im Raum kann durch die Weiterbildung der Erfindung gemäß Anspruch 11 automatisiert werden.

Die Präzision bei der Herstellung eines Fahrwegelements wird durch die in Anspruch 12 beanspruchte Weiterbildung der Erfindung überwacht. Diese Weiterbildung ist auch bei der Dokumentation und der Qualitätssicherung hilfreich.

Die Weiterbildung der Erfindung gemäß Anspruch 13 erleichtert die Montage und verkürzt die zur Herstellung eines Fahrwegelements notwendige Zeit.

Besonders bevorzugs ist die Weiterbildung der Erfindung gemäß Anspruch 14: Bei ihr sind die Spanntische so ausgebildet, daß das Fahrwegelement in einer Kopfüber-Position aufgebaut werden kann. Dabei wird zur Montage eines Fahrwegelements auf die Spanntische der einzelnen Spannvorrichtungen zunächst z.B. die obere Deckplatte des Fahrwegelements aufgelegt. Anschließend können die Seitenund sonstigen Elemente des Fahrwegelements an der Deckplatte und aneinander z.B. durch Punktschweißen verbunden bzw. angeheftet werden. Auf diese Weise wird in der erfindungsgemäßen Anlage das Fahrwegelement in einer "Kopfüber"-Lage aufgebaut. Der Begriff "kopfüber" ist hier auf die spätere Einbaulage bezogen, d.h., daß das Fahrwegelement am Ende der Montage mit seiner späteren Oberseite nach unten auf den Spanntischen aufliegt.

Nun wird ein Ausführungsbeispiel der Erfindung unter Bezugnahme auf die beiliegende Zeichnung im Detail erläutert. In dieser zeigen:
- Figur 1:: eine schematisierte Draufsicht auf eine Anlage zur Herstellung von Fahrwegelementen mit einer Mehrzahl von Spannvorrichtungen;
- Figur 2:: eine schematisierte Vorderansicht einer Spannvorrichtung von Figur 1; und
- Figur 3:: eine schematisierte Seitenansicht der Spannvorrichtung von Figur 2.

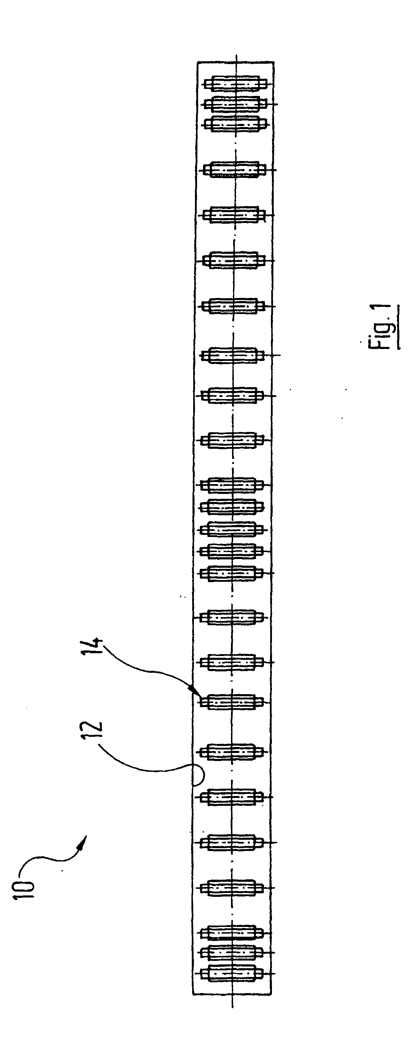

Eine Anlage zur Herstellung von Fahrwegelementen trägt in Figur 1 insgesamt das Bezugszeichen 10. Sie umfaßt eine im Boden vorhandene längliche, in der Draufsicht rechteckige Vertiefung 12, in der über ihre Länge verteilt insgesamt 25 Spannvorrichtungen 14 versehen angeordnet sind. Die Länge der Vertiefung 12 ist etwas größer als die Länge eines Fahrwegelements (in Figur 1 nicht dargestellt). Die Abstände zwischen den einzelnen Spannvorrichtungen 14 sind in der Mitte und in den beiden Endbereichen der Anlage 10 geringer als in den übrigen Bereichen.

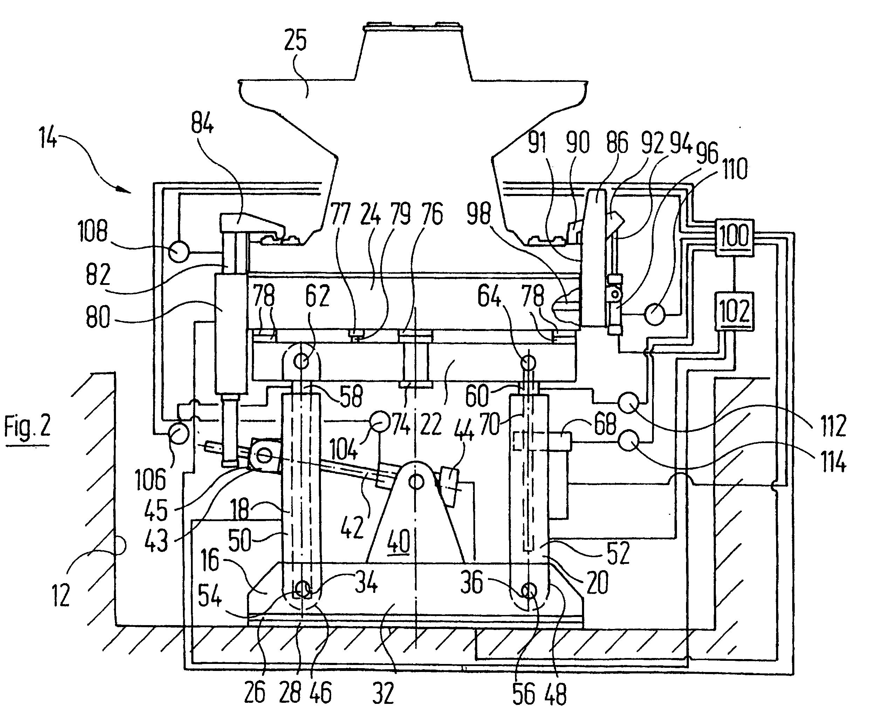

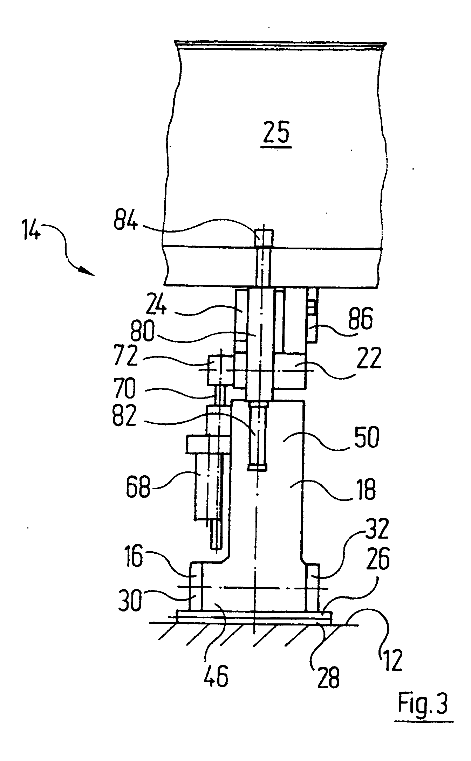

Eine der Spannvorrichtungen 14 wird nun unter Bezugnahme auf die Figuren 2 und 3 im Detail erläutert, wobei es sich versteht, daß die einzelnen Spannvorrichtungen 14 der Anlage 10 alle identisch ausgeführt sein können:

Die Spannvorrichtung 14 umfaßt ein Sockelelement 16, ein mit dem Sockelelement 16 über zwei vertikale Stützelemente 18, 20 verbundenes Zwischenelement 22 und einen über dem Zwischenelement 22 angeordneten Spanntisch 24. Auf diesem liegt ein Abschnitt eines Fahrwegelements 25 auf.

Das Sockelelement 16 umfaßt eine Basisplatte 26, welche mit einer bodenfesten Bodenplatte 28 verschraubt ist. Die Basisplatte 26 hat rechteckige Grundform und ist quer zur Anlagenlängsrichtung ausgerichtet, welche sich in Figur 2 senkrecht zur Ebene der Figur erstreckt. An jenen beiden gegenüberliegenden Längsrändern, die quer zur Längsrichtung der Anlage 10 verlaufen, ist, etwas von dem jeweiligen Rand beabstandet, jeweils eine vertikale Lasche 30 bzw. 32 angeformt, die sich über die Länge der Basisplattte 26 erstreckt (Figur 3). In der Lasche 30 sind Lagerbohrungen 34 und 36 vorhanden. In der Lagerlasche 32 sind ebenfalls den Lagerbohrungen 34 und 36 gegenüberliegende Lagerbohrungen vorgesehen, welche jedoch in den Figuren nicht sichtbar sind und daher kein Bezugszeichen tragen. In den Lagerbohrungen 34 und 36 und den nicht sichtbaren Lagerbohrungen sind die Stützelemente 18 und 20 auf noch näher darzustellende Weise gelagert.

In der Mitte der Basisplatte 26 ist ein Lagerbock 40 an der Basisplatte 26 befestigt, an dem ein auf eine Spindel 42 arbeitender Elektromotor 44 verschwenkbar angelenkt ist. Die Spindel 42 arbeitet auf einen Gewindeblock 45, welcher drehbar an einer Lasche des Stützelements 18 befestigt ist. Die gerade beschriebene Einheit dient der lateralen Verstellung der Position des Spanntisches 24, wie weiter unten im Detail erläutert ist.

Die Stützelemente 18 und 20 umfassen jeweils einen Anschlußabschnitt 46 bzw. 48 und einen Stützabschnitt 50 bzw. 52. Die Anschlußabschnitte 46, 48 und die Stützabschnitte 50, 52 sind in der in Figur 2 dargestellten Vorderansicht gleich breit. Wie aus Figur 3 ersichtlich ist, ist der Anschlußabschnitt 46 bzw. 48 der Stützelemente 18 bzw. 20 jedoch von der Seite gesehen breiter als die entsprechenden Stützabschnitte 50, 52 und paßt unter leichtem Gleitspiel zwischen die beiden Laschen 30 und 32 des Sockelelements 16. Durch die Anschlußabschnitte 46 bzw. 48 der Stützelemente 18 bzw. 20 verläuft jeweils eine Durchgangsbohrung (nicht dargestellt), durch die ein Lagerbolzen 54 bzw. 56 eingeführt ist, dessen Enden wiederum in den Lagerbohrungen 34, 36 und den nicht sichtbaren Lagerbohrungen in den Laschen 30, 32 des Sockelelements 16 gelagert sind. Somit können die Stützelemente 18 bzw. 20 quer zur Längsrichtung der Anlage 10 verschwenken bzw. verkippen, sind jedoch in Längsrichtung der Anlage 10 kippsicher festgehalten.

In jedem Stützelement 18, 20 ist jeweils eine Kolbenstange 58, 60 vertikal beweglich geführt. Das obere Ende der Kolbenstangen 58, 60 ist über eine in der Figur nicht näher dargestellte kardanische Lagerung mit dem Zwischenelement 22 verbunden. Teil der kardanischen Lagerung ist jeweils ein Bolzen 62, 64, welcher in eine Lagerbuchse 66, 68 im Zwischenelement 22 eingreift. Die Kolbenstangen 58 und 60 sind über eine in den Figuren 2 und 3 nicht sichtbare Einrichtung gegenüber den entsprechenden Stützabschnitten 50 und 52 in der jeweils eingestellten Position verriegelbar. Die Kolbenstangen 58 und 60 und die Stützabschnitte 50 und 52 der Stützelemente 18 und 20 bilden eine hydraulisch verstellbare Einrichtung, welche der Einstellung der vertikalen Position der Spanntisches 24 dient.

Wie insbesondere aus Figur 3 ersichtlich ist, ist am in Figur 2 rechten Stützelement 20 ein Elektromotor 68 um eine quer zur Anlagenlängsrichtung verlaufende horizontale Achse gelenkig befestigt, welcher eine vertikal nach oben verlaufende selbsthemmende Gewindespindel 70 antreibt. Diese arbeitet mit einem Gewindeblock 72 zusammen, der wiederum gelenkig am Zwischenelement 22 befestigt ist. Die aus Elektromotor 68, Gewindespindel 70 und Gewindeblock 72 bestehende Einheit ist in Anlagenlängsrichtung gesehen von der Kolbenstange 60 und der von den beiden kardanischen Lagerungen aufgespannten Schwenkachse beabstandet. Die Funktion dieser Einheit ist die Einstellung des Kippwinkels des Spanntisches 24 um eine quer zur Anlagenlängsrichtung und im wesentlichen horizontal verlaufende Achse.

Das Zwischenelement 22 hat die Form einer sich quer zur Anlagenlängsrichtung erstreckenden, langgestreckten und relativ schmalen Platte. Sie weist einen zentrischen, sich vertikal nach oben erstreckenden Schwenkbolzen 74 auf, welcher in eine in den Figuren nicht sichtbare Lagerbuchse im Spanntisch 24 eingreift. Zwischen Zwischenelement 22 und Spanntisch 24 sind um den Schwenkbolzen 74 Gleitlagerringe 76 angeordnet. Ferner liegt der Spanntisch 24 über an seinen seitlichen Rändern angeordnete Gleitlagerstücke 78 auf dem Zwischenelement 22 auf.

Der Spanntisch 24 hat quer zur Anlagenlängsrichtung in etwa die gleiche Abmessung wie das Zwischenelement 22, ist jedoch in Anlagenlängsrichtung gesehen weniger breit. An der Unterseite des Spanntisches 24 ist eine Zahnschiene 77 befestigt, in der ein Zahnrad 79 kämmt, welches von einem in den Figuren nicht sichtbaren, im Zwischenelement 22 angeordneten Elektromotor angetrieben wird. Auf diese Weise kann der Spanntisch 24 um die durch den Schwenkbolzen 76 vorgegebene vertikale Achse gegenüber dem Zwischenelement 22 verschwenkt werden.

An dem in Figur 2 linken Rand des Spanntisches 24 ist ein elektrischer Stellantrieb 80 befestigt, an dessen Betätigungsstange 82 am oberen Ende eine starre, zum Spanntisch 24 hin gerichtete Niederhalteklaue 84 befestigt ist. Die Betätigungsstange 82 ist über eine nicht dargestellte Einrichtung verriegelbar. Auf der gegenüberliegenden Seite sind am Rand des Spanntisches 24 zwei vertikale parallele Lagerlaschen angeordnet, von denen in der Zeichnung nur jene mit dem Bezugszeichen 86 sichtbar ist und zwischen denen eine Niederhalteklaue 90 schwenkbar gelagert ist. Die Lagerlaschen 86 bilden mit ihren dem Spanntisch 24 zugewandten Stirnseiten einen Anschlag 91. Ein vom Spanntisch 24 abgewandter Hebelabschnitt 92 der Niederhalteklaue 90 ist mit der Kolbenstange 94 eines Hydraulikzylinders 96 verbunden. Dieser ist wiederum an den beiden Haltelaschen 86 und 88 gelenkig gelagert. Die Haltelaschen 86 und 88 sind über ein Gestänge 98 mit einer in der Figur nicht sichtbaren Bewegungseinrichtung verbunden, mit der die Haltelaschen 86 und 88 und hierdurch auch die Halteklaue 90 in in Anlagenlängsrichtung gesehen seitlicher Richtung bewegt werden können.

Ferner ist in Figur 2 noch eine Steuer- und Datenerfassungseinrichtung 100 und ein Ventilblock 102 gezeigt. Der Ventilblock 102 ist hydraulisch mit den Stützelementen 18 und 20 sowie dem Hydraulikzylinder 96 für die rechte Niederhalteklaue 90 verbunden. Elektrisch ist er mit der Steuer- und Datenerfassungseinrichtung 100 gekoppelt. Diese empfängt Signale von Wegsensoren 104, 106, 108, 110, 112 und 114, welche die Position bzw. den Hub der Kolbenstangen bzw. der Spindeln der verschiedenen Antriebe erfassen. Ausgangsseitig ist die Steuer- und Datenerfassungseinrichtung 100 ferner mit den Elektroantrieben 44, 68 und 80 sowie den nicht sichtbaren Antrieben für die horizontale Verschwenkung des Spanntisches 24 und die seitliche Bewegung der Niederhalteklaue 96 verbunden.

Die Anlage 10 wird folgendermaßen betrieben:

Zunächst werden die in einem Speicher der Steuer- und Datenerfassungseinrichtung 100 abgelegten individuellen Einstelldaten für jede der 25 Spannvorrichtungen 14 für das individuelle herzustellende Fahrwegelement 25 abgerufen. Dann werden von der Steuer- und Datenerfassungseinrichtung 100 die Stützelemente 18 so angesteuert, daß sich die Kolbenstangen 58 und 60 in die jeweils gewünschte Lage bewegen. Dabei kann sich der Hub der Kolbenstangen 58 und 60 innerhalb einer Spannvorrichtung 14 unterscheiden, so daß das Zwischenelement 22 und mit ihm der Spanntisch 24 um eine im wesentliche parallel zur Anlagenlängsrichtung 10 verlaufende Achse verkippt wird. Hierdurch wird einer Verwindung oder Überhöhung des herzustellenden Fahrwegelements 25 Rechnung getragen.

Die Hübe der Kolbenstangen 58 und 60 können sich auch von einer Spannvorrichtung 14 zu einer anderen Spannvorrichtung 14 innerhalb der Anlage 10 unterscheiden, entsprechend dem gewünschten Höhenprofil des jeweiligen individuellen Fahrwegelements 25, welches in der Anlage 10 gerade hergestellt werden soll.

Von der Steuer- und Datenerfassungseinrichtung 100 wird ferner der Elektromotor 44 so angesteuert, daß sich der Gewindeblock 45 auf der Spindel 42 in die gewünschte Position bewegt. Da dieser über die Lasche 43 mit dem Stützabschnitt 50 des Stützelements 18 gelenkig verbunden ist, verkippt das Stützelement 18 um die durch den Lagerbolzen 54 vorgegebene Schwenkachse. Parallelogrammartig verkippt hierdurch auch das Stützelement 20, wodurch eine Veränderung der Position des Spanntisches 14 in einer im wesentlichen quer zur Anlagenlängsrichtung 10 liegenden horizontalen Richtung ermöglicht wird. Eine hierdurch bewirkte, unerwünschte Höhenänderung des Spanntisches 24 kann durch entsprechendes Ausfahren der Kolbenstangen 58, 60 kompensiert werden.

Der das Zahnrad 79 antreibende Elektromotor so angesteuert, daß der Spanntisch 24 gegenüber dem Zwischenelement 22 in der gewünschten Weise um die durch den Schwenkbolzen 74 vorgegebene vertikale Achse verschwenkt. Auch hier gilt wieder, daß diese Positionsänderung für jede Spannvorrichtung 14 der Anlage 10 individuell eingestellt werden kann, so daß ein Fahrwegelement 25 mit einer bestimmten Kurvenkrümmung hergestellt werden kann.

In gleicher Weise wird von der Steuer- und Datenerfassungseinrichtung 100 auch der Elektromotor 68 angesteuert, so daß über die Gewindespindel 70 und den Gewindeblock 72 das Zwischenelement 22 und damit der Spanntisch 24 um eine im wesentlichen quer zur Anlagenlängsrichtung verlaufende horizontale Achse verkippt wird. Auch diese Einstellung erfolgt individuell für jede der Spannvorrichtungen 14 der Anlage 10, entsprechend dem gewünschten Höhenprofil des herzustellenden Fahrwegelements 25.

Durch die vorgenannten Einstellungen bei den Spannvorrichtungen 14 der Anlage 10 wird ein für jedes Fahrwegelement 25 individualisiertes sphärisches Bett geschaffen, welches der individuellen Detailgeometrie des jeweiligen Fahrwegelements 25 entspricht.

Wenn diese Einstellarbeiten abgeschlossen sind, wird die obere Deckplatte des herzustellenden Fahrwegelements 25 auf die Spanntische 25 der Anlage 10 aufgelegt. Danach ist über eine Betätigung der Bewegungseinheit, welche auf die Stange 98 arbeitet, eine seitliche Einstellung der Position des durch die Laschen 86 gebildeten Anschlags 91 möglich, wodurch eine präzise Positionierung der oberen Deckplatte des Fahrwegelements 25 gewährleistet wird. Nun können z.B. Seitenteile und andere Elemente des Fahrwegelements an der oberen Deckplatte und aneinander z.B. durch Punktschweißen befestigt werden. Auf diese Weise entsteht ein zusammengeheftetes Fahrwegelement 25, gewissermaßen auf dem Kopf stehend, das in einem nachfolgenden Arbeitsgang oder auch in der beschriebenen Anlage fertig geschweißt werden kann.

Je nach Bedarf werden von der Steuer- und Datenerfassungseinrichtung 100 auch der elektrische Stellantrieb 80 und der Hydraulikzylinder 96 so angesteuert, daß ein Abschnitt oder ein Element des Fahrwegelements 25, z.B. ein seitlicher Rand, gegen den Spanntisch 24 verspannt wird, wodurch die Fertigungsgenauigkeit und die Sicherheit der Arbeiter während des Herstellvorgangs weiter erhöht wird.

Auf diese Weise kann auf ein und derselben Anlage 10 eine beliebige Anzahl unterschiedlicher Fahrwegelemente 25 in einer Kopfüber-Position, also mit der Oberseite nach unten, aufgebaut werden.

Eine Überprüfung der tatsächlichen Einstellungen der verschiedenen elektrischen oder hydraulischen Stellelemente ist durch die Wegsensoren 104 bis 114 möglich, welche deren aktuelle Stellung der Steuer- und Datenerfassungseinrichtung 100 anzeigen. Dies ist für die Erzielung der gewünschten hohen Fertigungsgenauigkeit und aufgrund der Anforderungen der Qualitätssicherung besonders hilfreich.

Es versteht sich, daß anstelle elektrischer oder hydraulischer Stellelemente auch pneumatische oder manuelle Stelleinrichtungen verwendet werden können.

Die von den verschiedenen Stellelementen eingenommene Position kann den Verzug, der sich bei der Bearbeitung des Fahrwegelements ergibt, antizipierend berücksichtigen, sodaß der Verzug automatisch kompensiert wird.

## Patentansprüche

1. Anlage (10) zur Herstellung von Fahrwegelementen (25)
mit einer Mehrzahl von in Anlagenlängsrichtung hintereinander angeordneten Spannvorrichtungen (12), welche jeweils ein bodenfestes Sockelelement (16) und einen mit diesem zumindest mittelbar verbundenen Spanntisch (24) umfassen, welcher so ausgestaltet ist, daß ein Abschnitt eines Fahrwegelements (25) auf ihn auflegbar und er gegenüber dem Sockelelement in (16) seiner Position verstellbar ist.

2. Anlage nach Anspruch 1, **dadurch gekennzeichnet, daß** der Spanntisch (24) mindestens einer Spannvorrichtung (12) um eine parallel zur Anlagenlängsachse verlaufende und im wesentlichen horizontale erste Achse und/oder eine senkrecht zu der Anlagenlängsachse verlaufende und im wesentlichen horizontale zweite Achse und/oder eine senkrecht zu der Anlagenlängsachse verlaufende und im wesentlichen vertikale dritte Achse verschwenkbar ist.

3. Anlage nach einem de Ansprüche 1 oder 2, **dadurch gekennzeichnet, daß** der Spanntisch (24) mindestens einer Spannvorrichtung (12) auf einem gegenüber dem Sockelelement (16) entsprechend beweglichen Zwischenelement (22) gehalten ist.

4. Anlage nach Anspruch 3, **dadurch gekennzeichnet, daß** der Spanntisch (24) mindestens einer Spannvorrichtung (12) gegenüber dem Zwischenelement (24) um die im wesentlichen vertikale dritte Achse verschwenkbar ist.

5. Anlage nach einem der Ansprüche 2 bis 4, **dadurch gekennzeichnet, daß** die vertikale Verstellung des Spanntisches (24) mindestens einer Spannvorrichtung (12) sowie dessen Verschwenkung über mindestens zwei voneinander beabstandete längenverstellbare, einerseits mit dem Sockelelement (16) und andererseits zumindest mittelbar mit dem Spanntisch (24) verbundene Stützelemente (18, 20) erfolgt.

6. Anlage nach Anspruch 5, **dadurch gekennzeichnet, daß** ein Kippwinkel mindestens eines der Stützelemente (18, 20) gegenüber dem Sockelelement (16) einstellbar ist.

7. Anlage nach einem der vorhergehenden Ansprüche, **dadurch gekennzeichnet, daß** bei mindestens einer Spannvorrichtung (12) mindestens eine seitliche Niederhalteklaue (84, 90) vorgesehen ist, mit der ein Abschnitt eines Fahrwegelements (25) gegen den Spanntisch (24) verspannbar ist.

8. Anlage nach Anspruch 7, **dadurch gekennzeichnet, daß** die Niederhalteklaue (86) gegenüber dem Spanntisch (24) vertikal verschieblich ist.

9. Anlage nach Anspruch 8, **dadurch gekennzeichnet, daß** mindestens zwei einander gegenüberliegende Niederhalteklauen (86, 90) vorgesehen sind, deren gegenseitiger Abstand veränderbar ist.

10. Anlage nach einem der vorhergehenden Ansprüche, **dadurch gekennzeichnet, daß** hydraulische (50, 58, 52, 60, 96) oder elektrische Aktuatoren, vorzugsweise elektrische selbsthemmende Spindelantriebe (42, 44, 68, 70, 80, 82) vorgesehen sind, welche die entsprechenden Bewegungen bewirken.

11. Anlage nach Anspruch 10, welche eine Steuereinheit (100) mit einem Speicher umfaßt, die Signale erzeugt, durch welche die Aktuatoren (50, 58, 52, 60, 96, 42, 44, 68, 70, 80, 82) abhängig von im Speicher für ein bestimmtes Fahrwegelement (25) abgelegten Daten in die entsprechenden Positionen bewegbar sind.

12. Anlage nach Anspruch 11, **dadurch gekennzeichnet, daß** Sensoren (104, 106, 108, 110, 112, 114) vorgesehen sind, welche die Stellung des Spanntisches (24) erfassen und ein entsprechendes Signal an die Steuereinheit (100) abgeben, die wiederum eine Komparatoreinrichtung aufweist, welche die erfaßten Werte mit im Speicher abgelegten Sollwerten vergleicht, wobei eine Warnmeldung erzeugt wird, wenn die erfaßten Werte und die Sollwerte um mehr als einen festgelegten Wert voneinander abweichen.

13. Anlage nach einem der vorhergehenden Ansprüche, **dadurch gekennzeichnet, daß** an dem Spanntisch (24) mindestens einer Spannvorrichtung (12) mindestens ein seitlicher Anschlag (91) vorgesehen ist, an den ein Abschnitt des Fahrwegelements (25) anlegbar ist.

14. Anlage nach einem der vorhergehenden Ansprüche,
dadurch gkennzeichnet, daß die Spanntische (24) so ausgestaltet sind, daß ein Abschnitt eines Fahrwegelements (25) in einer gegenüber der späteren Einbaulage um 180° gedrehten Kopfüber-Position auflegbar ist.

## Claims

1. A unit (10) for the production of track elements (25)., having a plurality of clamping devices (12) which are arranged one after another in the longitudinal direction of the unit and each include a pedestal element (16), which is fixed to the floor, and a clamping table (24) which is connected at least indirectly to said pedestal element and is constructed such that a portion of a track element (25) may be placed thereon and is positionally adjustable with respect to the pedestal element (16).

2. A unit according to Claim 1, **characterised in that** the clamping table (24) of at least one clamping device (12) may be pivoted about a substantially horizontal first axis, extending parallel to the longitudinal axis of the unit, and/or a substantially horizontal second axis, extending perpendicularly to the longitudinal axis of the unit, and/or a substantially vertical third axis, extending perpendicularly to the longitudinal axis of the unit.

3. A unit according to one of Claims 1 or 2, **characterised in that** the clamping table (24) of at least one clamping device (12) is held on an intermediate element (22) which may be moved accordingly with respect to the pedestal element (16).

4. A unit according to Claim 3, **characterised in that** the clamping table (24) of at least one clamping device (12) may be pivoted about the substantially vertical third axis with respect to the intermediate element (24).

5. A unit according to one of Claims 2 to 4, **characterised in that** the vertical adjustment of the clamping table (24) of at least one clamping device (12), and also its pivotal movement, are effected by way of at least two mutually spaced longitudinally adjustable supporting elements (18, 20) connected to the pedestal element (16) on the one hand, and at least indirectly to the clamping table (24) on the other.

6. A unit according to Claim 5, **characterised in that** a tilting angle of at least one of the supporting elements (18, 20) may be adjusted with respect to the pedestal element (16).

7. A unit according to one of the preceding claims, **characterised in that**, provided in at least one clamping device (12), there is at least one lateral holding-down claw (84, 90) by means of which a portion of a track element (25) may be clamped against the clamping table (24).

8. A unit according to Claim 7, **characterised in that** the holding-down claw (86) is vertically displaceable with respect to the clamping table (24).

9. A unit according to Claim 8, **characterised in that** at least two mutually opposing holding-down claws (86, 90) are provided, whereof the mutual spacing may be varied.

10. A unit according to one of the preceding claims, **characterised in that** hydraulic (50, 58, 52, 60, 96) or electric actuators, preferably electric self-locking spindle drives (42, 44, 68, 70, 80, 82) are provided, which effect the appropriate movements.

11. A unit according to Claim 10, which includes a control unit (100) having a memory which generates signals by means of which the actuators (50, 58, 52, 60, 96, 42, 44, 68, 70, 80, 82) may be moved into the appropriate positions depending on the data stored in the memory for a particular track element (25).

12. A unit according to Claim 11, **characterised in that** sensors (104, 106, 108, 110, 112, 114) are provided, which detect the position of the clamping table (24) and send an appropriate signal to the control unit (100), which in turn has a comparator device which compares the detected values with set values stored in the memory, a warning signal being generated if the detected values and the set values deviate from one another by more than a specified value.

13. A unit according to one of the preceding claims, **characterised in that**, provided on the clamping table (24) of at least one clamping device (12), there is at least one lateral stop (91) against which a portion of the track element (25) may be placed.

14. A unit according to one of the preceding claims, **characterised in that** the clamping tables (24) are constructed such that a portion of a track element (25) may be placed in a head-first position which is rotated through 180° with respect to the future installed position.

## Revendications

1. Installation (10) pour la fabrication d'éléments de voie (25) comprenant une pluralité de dispositifs de serrage (12), qui sont disposés les uns derrière les autres dans le sens longitudinal de l'installation et qui comportent chacun un socle (16) fixe au sol et un plateau de serrage (24), qui est assemblé au moins indirectement à celui-ci et qui est conçu de telle sorte qu'un tronçon d'un élément de voie (25) peut y être posé et de telle sorte que sa position est réglable par rapport au socle (16).

2. Installation selon la revendication 1, **caractérisée en ce que** le plateau de serrage (24) d'au moins un dispositif de serrage (12) peut pivoter autour d'un premier axe parallèle à l'axe longitudinal de l'installation et sensiblement horizontal et/ou autour d'un deuxième axe perpendiculaire à l'axe longitudinal de l'installation et sensiblement horizontal et/ou autour d'un troisième axe perpendiculaire à l'axe longitudinal de l'installation et sensiblement vertical.

3. Installation selon la revendication 1 ou 2, **caractérisée en ce que** le plateau de serrage (24) d'au moins un dispositif de serrage (12) est maintenu sur un élément intermédiaire (22) mobile de manière correspondante par rapport au socle (16).

4. Installation selon la revendication 3, **caractérisée en ce que** le plateau de serrage (24) d'au moins un dispositif de serrage (12) peut pivoter par rapport à l'élément intermédiaire (22) autour du troisième axe sensiblement vertical.

5. Installation selon l'une quelconque des revendications 2 à 4, **caractérisée en ce que** le réglage vertical du plateau de serrage (24) d'au moins un dispositif de serrage (12), ainsi que le pivotement dudit plateau de serrage sont assurés par au moins deux éléments de support (18, 20) écartés l'un de l'autre, réglables en longueur, assemblés avec le socle (16), d'une part, et au moins indirectement avec le plateau de serrage (24), d'autre part.

6. Installation selon la revendication 5, **caractérisée en ce qu'**on peut réguler un angle de basculement d'au moins l'un des éléments de support (18, 20) par rapport au socle (16).

7. Installation selon l'une quelconque des revendications précédentes, **caractérisée en ce qu'**il est prévu au niveau d'au moins un dispositif de serrage (12) au moins une mâchoire de retenue (84, 90), par laquelle un tronçon d'un élément de voie (25) peut être bloqué contre le plateau de serrage (24).

8. Installation selon la revendication 7, **caractérisée en ce que** la mâchoire de retenue (86) est mobile verticalement par rapport au plateau de serrage (24).

9. Installation selon la revendication 8, **caractérisée en ce qu'**il est prévu au moins deux mâchoires de retenue (86, 90) face à face, lesquelles sont réglables en distance l'une par rapport à l'autre.

10. Installation selon l'une quelconque des revendications précédentes, **caractérisée en ce qu'**il est prévu des actuateurs hydrauliques (50, 58, 52, 60, 96) ou électriques, de préférence des commandes à broche (42, 44, 68, 70, 80, 82) électriques irréversibles, qui engendrent les mouvements correspondants.

11. Installation selon la revendication 10, qui comprend une unité de commande (100) qui contient une mémoire et qui génère des signaux, par lesquels les actuateurs (50, 58, 52, 60, 96, 42, 44, 68, 70, 80, 82) peuvent être déplacés dans les positions correspondantes en fonction des données stockées dans la mémoire pour un élément de voie (25) déterminé.

12. Installation selon la revendication 11, **caractérisée en ce qu'**il est prévu des capteurs (104, 106, 108, 110, 112, 114), qui détectent la position du plateau de serrage (24) et émettent un signal correspondant vers l'unité de commande (100), qui comporte également une unité de comparaison, dans laquelle les valeurs mesurées sont comparées avec les valeurs de consigne stockées dans la mémoire, un message d'alarme étant généré lorsque l'écart entre les valeurs mesurées et les valeurs de consigne est supérieur à une valeur définie.

13. Installation selon l'une quelconque des revendications précédentes, **caractérisée en ce que**, au niveau du plateau de serrage (24) d'au moins un dispositif de serrage (12), est prévue au moins une butée (91) latérale, contre laquelle peut venir en appui un tronçon de l'élément de voie (25).

14. Installation selon l'une quelconque des revendications précédentes, **caractérisée en ce que** les plateaux de serrage (24) sont conçus de telle sorte qu'un tronçon d'un élément de voie (25) peut y être posé dans une position inverse, c'est-à-dire tournée de 180° par rapport à la position de montage ultérieure.
